# EUROPÄISCHE PATENTSCHRIFT

(11) **EP 1 391 358 B1**
(45) Veröffentlichungstag und Bekanntmachung des Hinweises auf die Patenterteilung: **14.06.2006**
(21) Anmeldenummer: 03018283.6
(22) Anmeldetag: 12.08.2003
(51) Int. Cl.: B60R 25/10, B60Q 1/26

(54) **Markenzeichen eines Kraftfahrzeuges bzw. Kraftfahrzeugherstellers**
Brand mark of a vehicle or a vehicle manufacturer
Logo de véhicule ou de producteur de véhicule

(30) Priorität: 22.08.2002 DE 10238397
(43) Veröffentlichungstag der Anmeldung: 25.02.2004
(73) Patentinhaber: ADAM OPEL AG, 65423 Rüsselsheim (DE)
(72) Erfinder: Pollert, Markus, 61476 Kronberg (DE)

(56) Entgegenhaltungen:
- DE-A- 19 955 543
- DE-U- 20 021 312
- GB-A- 2 336 235
- US-A- 5 939 979
- US-A- 6 037 865

## Beschreibung

Die Erfindung bezieht sich auf ein Markenzeichen eines Kraftfahrzeuges bzw. Kraftfahrzeugherstellers, das außen am Kraftfahrzeug befestigt ist und dem eine Lichtquelle zur Beleuchtung des Markenzeichens in Abhängigkeit von einer Aktivierung einer Wegfahrsperre und/oder einer Diebstahlwarnanlage zugeordnet ist.

Die DE 100 09 787 C2 offenbart ein Kraftfahrzeug mit einer Diebstahlwarnanlage und mit einem im Fahrzeuginnenraum angeordneten optischen Signalmittel zur Anzeige des Betriebszustandes der Diebstahlwarnanlage. Als optisches Signalmittel wird zumindest eine an sich bereits im Fahrzeuginnenraum vorhandene Innenraumleuchte verwendet, die bei aktiver Diebstahlwarnanlage aussetzend mit elektrischer Spannung beaufschlagt wird. Die blinkend angesteuerte Innenraumleuchte signalisiert zwar eine aktive Diebstahlwarnanlage, entfaltet jedoch praktisch keine oder lediglich eine geringe Wirkung nach außen.

Des Weiteren ist aus der US-A-5 939 979 ein Beleuchtungssystem für ein Kraftfahrzeug bekannt, das eine Beleuchtungsabdeckung mit einem lichtiluminierbaren Bereich umfasst, der zur leuchtenden Darstellung eines Symbols dient, wobei das Symbol zu einer Marke des Fahrzeuges oder des Fahrzeugherstellers korrespondiert. Das Symbol wird dargestellt, wenn der Fahrer eine bestimmte Fahrzeugfunktion, wie Parken, Blinken, Warnblinken, Fahren, Rückwärtsfahren oder Türöffnen, ausführt.

Darüber hinaus ist in der DE 200 04 168 U1 eine Außenbeleuchtung für ein Kraftfahrzeug beschrieben, bei der ein Produktkennzeichen des Fahrzeugherstellers mit einer Lichtquelle in Verbindung steht und nach einem Einschalten einer Zündung permanent beleuchtet ist. Die permanente Beleuchtung einer am Kraftfahrzeug angebrachten Marke ist nach gesetzlichen Vorschriften zumindest in Europa unzulässig.

Im Weiteren zeigt die den nächstliegenden Stand der Technik bildende US-A- 6 037 865 ein Kraftfahrzeug mit einem Elektroluminiszenz-Leuchtband zur Beleuchtung eines außen am Kraftfahrzeug angeordneten Markenzeichens in Abhängigkeit von einer Aktivierung einer Diebstahlwarnanlage und/oder einer Zentralverriegelungsanlage.

Es ist Aufgabe der Erfindung, ein Markenzeichen der eingangs genannten Art zu schaffen, das in Abhängigkeit von einer Aktivierungsfunktion eine optisch gut wahrnehmbare Hinweisfunktion auf ein Unternehmen aufweist und dabei kostengünstig zu fertigen ist.

Erfindungsgemäß wird die Aufgabe dadurch gelöst, dass die Lichtquelle mit einem die Kontur des Markenzeichens aufweisenden Lichtleiter zur Beleuchtung des Markenzeichens zusammenwirkt.

Aufgrund dieser Maßnahme übernimmt das von der Lichtquelle in Abhängigkeit von einer Aktivierung die Wegfahrsperre und/oder die Diebstahlwarnanlage beleuchtete Markenzeichen die Funktion eines Statusindikators für die Wegfahrsperre und/oder die Diebstahlwarnanlage. Das Markenzeichen ist für einen sich vom Kraftfahrzeug entfernenden Benutzer desselben in der Regel gut sichtbar, so dass er den Status der Wegfahrsperre bzw. der Diebstahlwarnanlage erkennt, wobei das Markenzeichen bei eingeschalteter Lichtquelle weithin sichtbar ist und damit seine Hinweisfunktion auf das das Kraftfahrzeug herstellende Unternehmen oder den Kraftfahrzeugtyp erfüllt. Selbstverständlich können auch weiterhin die Blinkleuchten oder eine im Inneren des Kraftfahrzeuges angeordnete Leuchte als zusätzliche Statussymbole für den Aktivierungszustand der Wegfahrsperre bzw. der Diebstahlwarnanlage verwendet werden. Die Lichtstärke der Lichtquelle ist konform zu geltenden Vorschriften bezüglich zulässiger Lichtfunktionen am Kraftfahrzeug und beträgt beispielsweise 0,5 cd. Durch den Lichtleiter wird das Markenzeichen betont und ist optisch auch aus einer relativ großen Entfernung wahrnehmbar.

Bevorzugt ist der Lichtleiter unmittelbar benachbart zu dem Markenzeichen angeordnet. Hierdurch sind sowohl das Markenzeichen selbst als auch dessen unmittelbare Umgebung bei eingeschalteter Lichtquelle optisch hervorgehoben.

Damit sich die Lichtquelle nicht optisch störend auf das Markenzeichen auswirkt, ist zweckmäßigerweise die dem Lichtleiter zugeordnete Lichtquelle derart hinter dem Markenzeichen angeordnet, dass sie für einen Betrachter optisch nicht wahrnehmbar ist.

Weiterhin wird die Aufgabe erfindungsgemäß alternativ auch dadurch gelöst, daß die Lichtquelle innerhalb des Markenzeichens angeordnet ist, wobei die lichtausstrahlende Oberfläche des Markenzeichens aus einem semipermeablen Kunststoff gefertigt ist.

Der semipermeable Kunststoff ist bei eingeschalteter Lichtquelle für das ausgestrahlte Licht durchlässig und weist bei ausgeschalteter Lichtquelle die ihm zugewiesene und für das Markenzeichen charakteristische Oberfläche auf. Beispielsweise kann das Markenzeichen im unbeleuchteten Zustand eine verchromte Oberfläche aufweisen. Darüber hinaus ist die Lichtquelle durch das Markenzeichen geschützt.

Vorteilhafterweise beleuchtet die Lichtquelle das Markenzeichen bei der Aktivierung und/oder Deaktivierung der Wegfahrsperre und/oder Diebstahlwarnanlage für eine vorbestimmte Zeitspanne. Damit benötigt die Lichtquelle nicht unnötig viel Spannung und ruft dennoch bei einem Betrachter beispielsweise beim Verlassen oder beim Starten des Kraftfahrzeuges eine besondere optische Wirkung hervor.

Um bei einem abgestellten Kraftfahrzeug dauerhaft auf das Markenzeichen aufmerksam zu machen, beleuchtet vorzugsweise die Lichtquelle das Markenzeichen während der Aktivierung der Wegfahrsperre und/oder Diebstahlwarnanlage. Zweckmäßigerweise beleuchtet die Lichtquelle das Markenzeichen blinkend.

Zur relativ einfachen Bewerkstelligung des Ein- und Ausschaltens der Lichtquelle ist die Lichtquelle mit einem elektronischen Steuergerät gekoppelt, das eine Spannungsversorgung der Lichtquelle steuert.

Bevorzugt steht das Steuergerät über einen Datenbus des Kraftfahrzeuges mit der Wegfahrsperre und/oder einem Steuergerät der Diebstahlwarnanlage in Verbindung. Somit sind keine zusätzlichen Verbindungsleitungen erforderlich, um eine Information über den Aktivierungszustand der Wegfahrsperre bzw. der Diebstahlwarnanlage zu übermitteln.

Um eine Batterie des Kraftfahrzeuges nicht unnötig zu belasten, ist die Lichtquelle mit einem Helligkeits-Sensor gekoppelt. Der Helligkeits-Sensor stellt nach einer entsprechenden Beschaltung sicher, dass die Lichtquelle das Markenzeichen lediglich bei Dunkelheit beleuchtet.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:

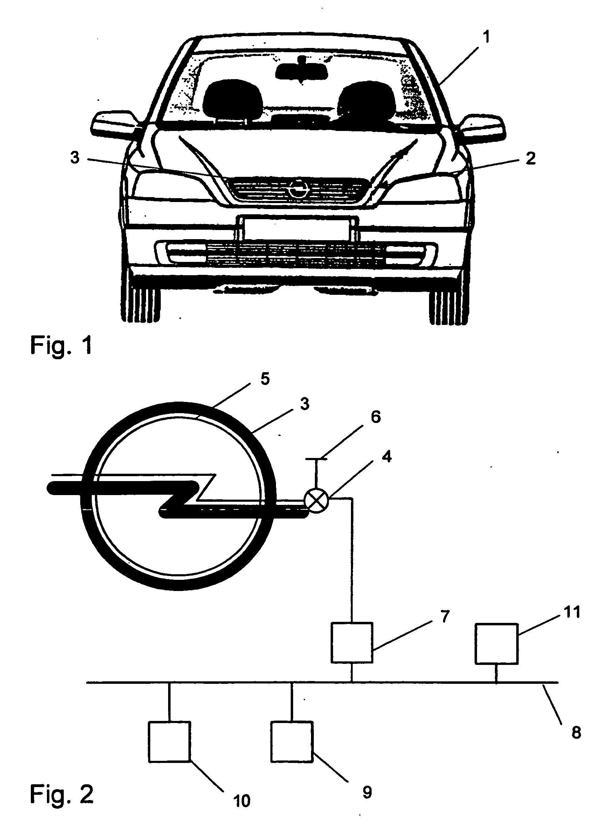

- Fig. 1: eine Darstellung eines Kraftfahrzeuges mit einem erfindungsgemäßen Markenzeichen und
- Fig. 2: eine vereinfachte Darstellung des Markenzeichens nach Fig. 1 mit zugeordneter Ansteuerung.

Ein Kraftfahrzeug 1 weist auf seiner Frontpartie 2 ein Markenzeichen 3 auf, das auf den Hersteller des Kraftfahrzeuges hinweist. Dem Markenzeichen 3 ist eine Lichtquelle 4 zu seiner Beleuchtung zugeordnet, die mit einem Lichtleiter 5 zusammenwirkt, dessen Kontur zu der des Markenzeichens 3 korrespondiert. Hierbei ist die Lichtquelle 4 verdeckt hinter dem Markenzeichen 3 angeordnet, so dass sie für einen Betrachter optisch nicht erkennbar ist.

Die Lichtquelle 4 liegt zum einen an einem Masseanschluss 6 an und ist zum anderen mit einem elektronischen Steuergerät 7 gekoppelt, das über einen Datenbus 8 des Kraftfahrzeuges 1 mit einer Wegfahrsperre 9 und einem Steuergerät 10 einer Diebstahlwarnanlage in Verbindung steht. Des Weiteren ist ein Helligkeits-Sensor 11 an den Datenbus 8 angeschlossen.

Aktiviert ein Benutzer des Kraftfahrzeuges 1 die Wegfahrsperre 9 bzw. die Diebstahlwarnanlage, erhält das mit der Lichtquelle 4 verbundene Steuergerät 7 über den Datenbus 8 eine entsprechende Information und fragt Signale des Helligkeits-Sensors 11 ab, die einen Rückschluss auf die Lichtstärke in der Umgebung des Kraftfahrzeuges 1 zulassen. Befindet sich das Kraftfahrzeug 1 in einer relativ dunklen Umgebung, dann bewirkt das der Lichtquelle 4 zugeordnete Steuergerät 7, dass die Lichtquelle 4 mit Spannung versorgt wird, worauf der Lichtleiter 5 das Markenzeichen 3 beleuchtet. Bei einer Deaktivierung der Wegfahrsperre 9 bzw. der Diebstahlwarnanlage wird die Spannungsversorgung der Lichtquelle 4 seitens des zugeordneten Steuergerätes 7 unterbrochen.

## Patentansprüche

1. Markenzeichen eines Kraftfahrzeuges (1) bzw. Kraftfahrzeugherstellers, das außen am Kraftfahrzeug (1) befestigt ist und dem eine Lichtquelle (4) zur Beleuchtung des Markenzeichens (3) in Abhängigkeit von einer Aktivierung einer Wegfahrsperre (9) und/oder einer Diebstahlwarnanlage zugeordnet ist, **dadurch gekennzeichnet, dass** die Lichtquelle (4) mit einem die Kontur des Markenzeichens (3) aufweisenden Lichtleiter (5) zur Beleuchtung des Markenzeichens (3) zusammenwirkt.

2. Markenzeichen nach Anspruch 1, **dadurch gekennzeichnet, dass** der Lichtleiter (5) unmittelbar benachbart zu dem Markenzeichen (3) angeordnet ist.

3. Markenzeichen nach Anspruch 1 oder 2, **dadurch gekennzeichnet, dass** die dem Lichtleiter (5) zugeordnete Lichtquelle (4) derart hinter dem Markenzeichen (3) angeordnet ist, dass sie für einen Betrachter optisch nicht wahrnehmbar ist.

4. Markenzeichen nach dem Oberbegriff des Anspruchs 1, **dadurch gekennzeichnet, dass** die Lichtquelle (4) innerhalb des Markenzeichens (3) angeordnet ist, wobei die lichtausstrahlende Oberfläche des Markenzeichens (3) aus einem semipermeablen Kunststoff gefertigt ist.

5. Markenzeichen nach einem der Ansprüche 1 bis 5, **dadurch gekennzeichnet, dass** die Lichtquelle (4) das Markenzeichen bei der Aktivierung und/oder Deaktivierung der Wegfahrsperre (9) und/oder Diebstahlwarnanlage für eine vorbestimmte Zeitspanne beleuchtet.

6. Markenzeichen nach einem der Ansprüche 1 bis 5, **dadurch gekennzeichnet, dass** die Lichtquelle (4) das Markenzeichen (3) während der Aktivierung der Wegfahrsperre (9) und/oder Diebstahlwarnanlage beleuchtet.

7. Markenzeichen nach einem der Ansprüche 1 bis 7, **dadurch gekennzeichnet, dass** die Lichtquelle (4) das Markenzeichen (3) blinkend beleuchtet.

8. Markenzeichen nach einem der Ansprüche 1 bis 6, **dadurch gekennzeichnet, dass** die Lichtquelle (4) mit einem elektronischen Steuergerät (7) gekoppelt ist, das eine Spannungsversorgung der Lichtquelle (4) steuert.

9. Markenzeichen nach Anspruch 7, **dadurch gekennzeichnet, dass** das Steuergerät (7) über einen Datenbus (8) des Kraftfahrzeuges (1) mit der Wegfahrsperre (9) und/oder einem Steuergerät (10) der Diebstahlwarnanlage in Verbindung steht.

10. Markenzeichen nach einem der Ansprüche 1 bis 8, **dadurch gekennzeichnet, dass** die Lichtquelle (4) mit einem Helligkeits-Sensor (11) gekoppelt ist.

## Claims

1. Marque badge of a motor vehicle (1) and/or motor vehicle manufacturer, which is fastened to the outside of the motor vehicle (1) and with which is associated a light source (4) for illuminating the marque badge (3) in dependence upon an activation of an immobilizer (9) and/or an anti-theft alarm system, **characterized in that** the light source (4), for illuminating the marque badge (3), co-operates with an optical conductor (5) having the contour of the marque badge (3).

2. Marque badge according to claim 1, **characterized in that** the optical conductor (5) is disposed immediately adjacent to the marque badge (3).

3. Marque badge according to claim 1 or 2, **characterized in that** the light source (4) associated with the optical conductor (5) is disposed behind the marque badge (3) so as to be hidden from sight.

4. Marque badge according to the preamble of claim 1, **characterized in that** the light source (4) is disposed inside the marque badge (3), wherein the light-emitting surface of the marque badge (3) is manufactured from a semi-permeable plastics material

5. Marque badge according to one of claims 1 to 5, **characterized in that** the light source (4) upon the activation and/or deactivation of the immobilizer (9) and/or anti-theft alarm system illuminates the marque badge for a predetermined period of time.

6. Marque badge according to one of claims 1 to 5, **characterized in that** the light source (4) illuminates the marque badge (3) during the activation and/or deactivation of the immobilizer (9) and/or anti-theft alarm system.

7. Marque badge according to one of claims 1 to 7, **characterized in that** the light source (4) illuminates the marque badge (3) in a flashing manner.

8. Marque badge according to one of claims 1 to 6, **characterized in that** the light source (4) is coupled to an electronic control unit (7) that controls a power supply of the light source (4).

9. Marque badge according to claim 7, **characterized in that** the control unit (7) is connected by a data bus (8) of the motor vehicle (1) to the immobilizer (9) and/or to a control unit (10) of the anti-theft alarm system.

10. Marque badge according to one of claims 1 to 8, **characterized in that** the light source (4) is coupled to a brightness sensor (11).

## Revendications

1. Logo de véhicule (1) ou de producteur de véhicule, qui est fixé à l'extérieur du véhicule (1) et associé à une source lumineuse (4) pour éclairer le logo (3) en fonction d'une activation d'un dispositif antidémarrage (9) et/ou d'un système d'alarme antivol, **caractérisé en ce que** la source lumineuse (4) coopère avec un guide de lumière (5) présentant le contour du logo (3) afin d'éclairer le logo (3).

2. Logo selon la revendication 1, **caractérisé en ce que**, le guide de lumière (5) est disposé immédiatement dans le voisinage du logo (3).

3. Logo selon la revendication 1 ou 2, **caractérisé en ce que** la source lumineuse (4) associée au guide de lumière (5) est disposée derrière le logo (3) de manière à ne pas être aperçue optiquement par un observateur.

4. Logo conformément au préambule de la revendication 1, **caractérisé en ce que** la source lumineuse (4) est disposée à l'intérieur du logo (3), la surface photogène du logo (3) étant fabriquée dans une matière plastique semi-perméable.

5. Logo selon l'une des revendications 1 à 5, **caractérisé en ce que** la source lumineuse (4) éclaire le logo par l'activation et/ou la désactivation du dispositif anti-démarrage (9) et/ou du système d'alarme antivol pour une période prédéterminée.

6. Logo selon l'une des revendications 1 à 5, **caractérisé en ce que** la source lumineuse (4) éclaire le logo (3) pendant l'activation du dispositif antidémarrage (9) et/ou du système d'alarme antivol.

7. Logo selon l'une des revendications 1 à 7, **caractérisé en ce que** la source lumineuse (4) éclaire le logo (3) en clignotant.

8. Logo selon l'une des revendications 1 à 6, **caractérisé en ce que** la source lumineuse (4) est couplée à un organe de commande électronique (7) qui commande une alimentation en courant de la source lumineuse (4).

9. Logo selon la revendication 7, **caractérisé en ce que** l'organe de commande (7) est relié par un bus de données (8) du véhicule (1) au dispositif anti-démarrage (9) et/ou à un organe de commande (10) du système d'alarme antivol.

10. Logo selon l'une des revendications 1 à 8, **caractérisé en ce que** la source lumineuse (4) est couplée à un capteur de luminosité (11).
